Europäisches Patentamt

European Patent Office

Office européen des brevets

(19)

(11) **EP 1 166 295 B1**

(12) **FASCICULE DE BREVET EUROPEEN**

(45) Date de publication et mention
de la délivrance du brevet:
**08.06.2005 Bulletin 2005/23**

(51) Int Cl.⁷: **H01F 7/18**

(21) Numéro de dépôt: **00958027.5**

(22) Date de dépôt: **24.03.2000**

(86) Numéro de dépôt international:
**PCT/FR2000/000746**

(87) Numéro de publication internationale:
**WO 2000/058976 (05.10.2000 Gazette 2000/40)**

(54) **PROCEDE POUR LA DETERMINATION DE LA POSITION D'UN ORGANE MOBILE DANS AU MOINS UN ENTREFER PRINCIPAL D'UN ACTIONNEUR ELECTROMAGNETIQUE**

**VERFAHREN ZUR POSITIONSBESTIMMUNG EINES BEWEGLICHEN ELEMENTS IN MINDESTENS EINEM HAUPTLUFTSPALT EINES ELEKTROMAGNETISCHEN AKTUATORS**

**METHOD FOR DETERMINING THE POSITION OF A MOVEABLE ELEMENT IN AT LEAST ONE MAIN POLE AIR GAP IN AN ELECTROMAGNETIC ACTUATOR**

(84) Etats contractants désignés:
**AT BE CH CY DE DK ES FI FR GB GR IE IT LI LU MC NL PT SE**

(30) Priorité: **26.03.1999 FR 9903912**

(43) Date de publication de la demande:
**02.01.2002 Bulletin 2002/01**

(73) Titulaire: **Moving Magnet Technologies "M.M.T." 25000 Besançon (FR)**

(72) Inventeurs:
• **BESSON, Christophe**
  **F-25000 Besançon (FR)**
• **GANDEL, Pierre**
  **F-25660 Montfaucon (FR)**

(74) Mandataire: **Rhein, Alain**
  **Cabinet Bleger-Rhein**
  **17, rue de la Forêt**
  **67550 Vendenheim (FR)**

(56) Documents cités:
EP-A- 0 558 362          EP-A- 0 949 744
EP-B- 0 642 704          WO-A-94/27303
DE-A- 19 501 766         DE-U- 29 703 587
US-A- 4 665 348          US-A- 4 779 582
US-A- 5 006 901          US-A- 5 523 684

## Description

L'invention a trait à un procédé pour la détermination de la position d'un organe mobile dans au moins un entrefer principal d'un actionneur électromagnétique comportant une structure statorique sous forme d'un circuit magnétique réalisé en un matériau à haute perméabilité magnétique et comprenant au moins une bobine électrique, l'entrefer principal étant soumis à un champ magnétique résultant d'au moins un aimant, selon le cas, fixe ou associé audit organe mobile. L'invention concerne, encore, les actionneurs électromagnétiques polarisés permettant la mise en oeuvre du procédé selon l'invention.

La présente invention trouvera son application dans le domaine des actionneurs, à aimant permanent mobile, à bobine mobile et/ou à réluctance variable, aussi bien rotatifs que linéaires.

En fin de compte, cette invention est applicable à l'ensemble des actionneurs électromagnétiques dont le déplacement de la partie mobile dans le circuit magnétique induit une variation de flux dans ce dernier.

Ainsi, les documents EP-0.848.481 et EP-0.558.362 décrivent des exemples d'actionneurs rotatifs, tandis que les documents US-4.195.277, US-4.779.582 et WO-94/27303 font état d'exemples d'actionneurs linéaires susceptibles d'être concernés par la présente invention.

En particulier, il est à remarquer que dans la plupart des applications, de tels actionneurs électromagnétiques sont prévus aptes à agir, au travers de leur organe mobile, directement sur la charge à commander, c'est à dire sans intervention au travers d'une transmission mécanique quelconque, tel qu'un réducteur, un multiplicateur, un différentiel, ou similaire.

Aussi, de tels actionneurs sont susceptibles de donner une image représentative de la position de ladite charge, grâce à un asservissement de position, donc une électronique de commande appropriée, et un capteur de position de l'organe mobile. Ce capteur est, dans la plupart des cas, de type potentiométrique, magnétique ou optique, et monté au dos de l'actionneur ou couplé à la charge.

Il va de soi qu'un tel capteur de position crée un encombrement supplémentaire au niveau de l'actionneur, tandis que sa liaison électrique et celle de l'actionneur vers la carte électronique d'asservissement s'avère relativement complexe.

En fin de compte, la présente invention se veut à même de répondre au problème précité au travers d'un procédé pour la détermination de la position d'un organe mobile dans un entrefer principal d'un actionneur électromagnétique polarisé qui nécessite la mise en oeuvre de moyens de mesure particulièrement simples, tant du point de vue de leur conception que de l'interprétation du signal qu'ils sont amenés à délivrer. De plus, ces moyens de mesure présentent la particularité de ne créer aucun encombrement supplémentaire au niveau de cet actionneur, dans la mesure où ils sont directement intégrés à ce dernier.

Ainsi, l'invention concerne un procédé pour la détermination de la position d'un organe mobile dans au moins un entrefer principal d'un actionneur électromagnétique polarisé comportant une structure statorique sous forme d'un circuit magnétique réalisé en un matériau à haute perméabilité magnétique et comprenant au moins une bobine électrique, l'entrefer principal étant soumis à un champ magnétique résultant d'au moins un aimant, selon le cas, fixe ou associé audit organe mobile, ce procédé consistant en ce que :

- on définit au niveau du circuit magnétique de la structure statorique au moins un entrefer secondaire de mesure ;
- on dispose dans cet entrefer secondaire au moins un élément magnétosensible, tel qu'une sonde à effet Hall, une sonde magnétorésistive ou analogue, prévu apte à délivrer un signal électrique représentatif de l'induction magnétique totale le traversant, respectant une fonction connue dépendant

  - du courant dans la ou les bobines électriques ;
  - et de la position de l'organe mobile dans l'entrefer principal ;

- on mesure le courant traversant la ou les bobines électriques pour déduire, à partir de la fonction connue et de l'induction magnétique totale dans l'entrefer secondaire mesurée au travers du signal délivré par l'élément magnétosensible, ladite position de l'organe mobile dans l'entrefer principal.

L'invention concerne, encore, un actionneur électromagnétique polarisé comportant, d'une part, un organe mobile dans au moins un entrefer principal lequel est soumis à un champ magnétique résultant d'au moins un aimant, selon le cas, fixe ou associé audit organe mobile et, d'autre part, une structure statorique sous forme d'un circuit magnétique réalisé en un matériau à haute perméabilité magnétique et comprenant au moins une bobine électrique, caractérisé en ce qu'il comporte au moins un élément magnétosensible tel qu'une sonde à effet Hall, prévu apte à délivrer un signal électrique représentatif de l'induction magnétique totale le traversant disposé dans un entrefer secondaire de mesure définie au niveau du circuit magnétique de la structure statorique.

La présente invention sera mieux comprise à la lecture de la description qui va suivre et des dessins joints en annexe se rapportant à des exemples de réalisation et dans lesquels :

- la figure 1 correspond à une représentation graphique et schématisée de l'évolution de l'induction totale $B(\alpha)$ traversant l'élément magnétosensible placé dans un entrefer secondaire d'un actionneur électromagnétique à aimant mobile tel que celui représenté dans la figure 3, cette grandeur étant la somme de l'induction Bni($\alpha$) créée par la circulation du courant dans là bobine électrique et de l'induction Bm($\alpha$) générée par le déplacement de l'organe mobile, ceci en fonction de la position angulaire $\alpha$ de ce dernier ;

- la figure 2 est une représentation graphique similaire à la figure 1 illustrant l'évolution de l'induction totale B($\alpha$) dans l'entrefer secondaire de mesure par rapport à la position $\alpha$ de l'organe mobile, ceci pour différentes valeurs de courant électrique dans la bobine ;

- la figure 3 est une représentation schématisée d'un exemple de réalisation d'un actionneur électromagnétique rotatif à aimant mobile autorisant la mise en oeuvre du procédé selon l'invention pour la détermination de la position de son organe mobile dans son entrefer principal ;

- les figures 4 et 5 illustrent, de manière schématisée, des exemples de réalisation d'un entrefer secondaire dans la structure statorique d'un actionneur électromagnétique rotatif, tel que représenté dans la figure 3 ;

- la figure 6 est une représentation schématisée et en coupe d'un autre mode de réalisation d'un actionneur électromagnétique rotatif dont la structure statorique, en deux parties, comporte un entrefer secondaire dans lequel prend position un élément magnétosensible pour la mise en oeuvre du procédé selon l'invention ;

- la figure 7A correspond à un autre mode de réalisation d'un actionneur électromagnétique conforme à l'invention ;

- la figure 7B est une représentation schématisée et en perspective de cet actionneur illustré dans la figure 7A, l'une des parties polaires ayant été retirée pour rendre visible l'entrefer secondaire et la sonde magnétosensible ;

- les figures 8, 9, 10 illustrent, de manière schématisée, trois modes de réalisation d'actionneurs linéaires présentant au niveau de leur structure statorique un entrefer secondaire susceptible de recevoir un élément magnétosensible pour la détermination de la position de leur organe mobile ;

- les figures 11 et 12 illustrent, de manière schématisée, deux modes de réalisation d'actionneurs linéaires dont l'organe mobile est défini par une bobine ;

- les figures 13 et 14 correspondent à deux modes de réalisation d'actionneurs électromagnétiques dont l'organe mobile est défini par une pièce ferromagnétique reliée à un arbre apte à transmettre les efforts à la charge à commander.

- la figure 15 est une représentation schématisée d'un actionneur polarisé à palette mobile, comportant deux structures statoriques disposées de part et d'autre d'un plan de symétrie, entre ces structures venant se déplacer l'organe mobile sous forme d'une palette ;

- La figure 16 illustre de manière schématisée la répartition des flux magnétiques dans un actionneur bistable, tel que représenté dans les figures 13 et 14, ceci en l'absence de courant dans la ou les bobines et avec l'organe mobile en position centrale par rapport aux entrefers principaux ;

- La figure 17 est une représentation graphique, pour un actionneur bistable comme représenté dans les figures 13, 14 et 15, de l'évolution, en fonction de la position de l'organe mobile, de l'induction due au courant et des inductions mesurées dans les entrefers secondaires, d'où l'on vient déduire l'induction dépendant exclusivement de cette position de l'organe mobile et, donc, la position de celui-ci.

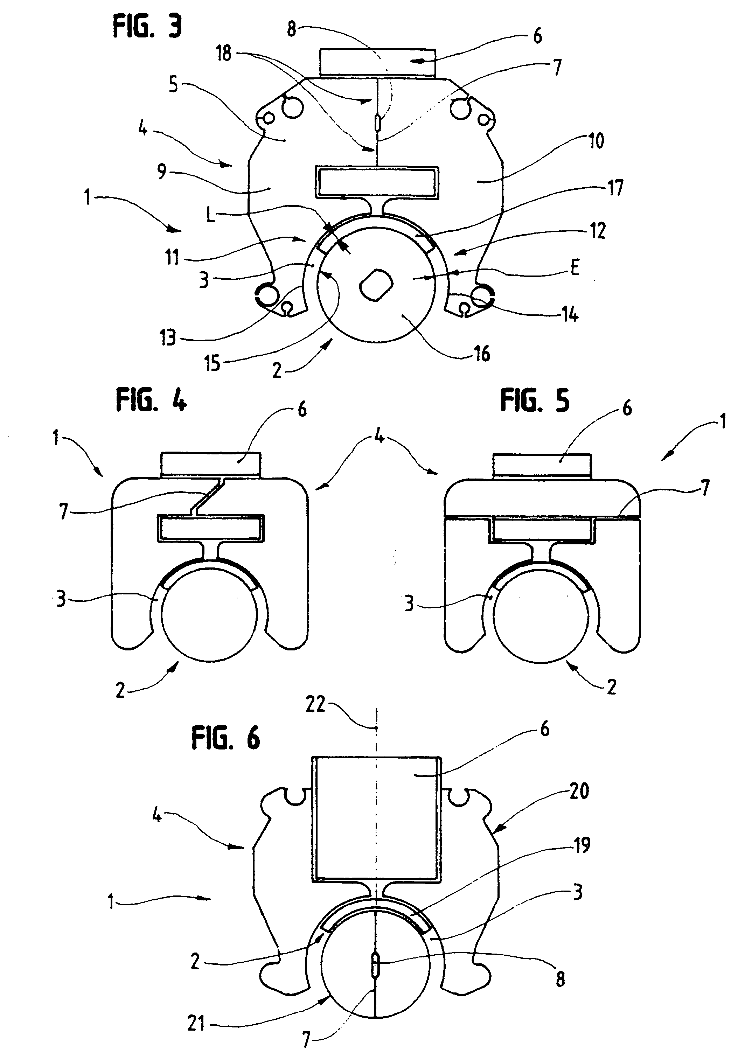

Tel que représenté dans les figures 3 à 14, la présente invention a trait au domaine des actionneurs électromagnétiques 1 comportant, d'une part, un organe 2 mobile dans au moins un entrefer principal 3, 3A et, d'autre part, une structure statorique 4, sous forme d'un circuit magnétique 5 réalisé en un matériau à haute perméabilité magnétique et comprenant au moins une bobine.

On remarquera, en particulier, comme visible, précisément, dans ces figures 3 à 14, que la présente invention concerne tant les actionneurs électromagnétiques de type rotatif que linéaire. En fait, elle trouvera son application dans tout type d'actionneur électromagnétique polarisé dont le déplacement d'un organe mobile dans un circuit magnétique induit une variation de flux dans ce dernier.

L'invention concerne tout particulièrement un procédé pour la détermination de la position qu'occupe, à un instant donné dans au moins un entrefer principal 3, 3A, l'organe mobile 2 de ces actionneurs électromagnétiques 1.

Plus particulièrement, ce procédé consiste à définir, au niveau du circuit magnétique 5 de la structure statorique 4, au moins un entrefer secondaire de mesure 7, 7A. L'on vient alors disposer dans cet entrefer secondaire 7, 7A un élément magnétosensible 8, en particulier une sonde à effet Hall ou une sonde magnétorésistive, qui est apte à délivrer un signal électrique représentatif de l'induction magnétique totale le traversant.

Si l'on prend le cas particulier d'un actionneur électromagnétique polarisé à aimant mobile, notamment de type rotatif, tel que celui représenté dans la figure 3, l'induction magnétique totale B($\alpha$) dans l'entrefer secondaire de mesure 7 est une grandeur qui varie avec la position angulaire $\alpha$ de l'organe mobile 2 et correspond à la somme de l'induction due à l'aimant de l'organe mobile Bm($\alpha$) et à celle Bni($\alpha$) due au courant circulant dans la bobine 6 de la structure statorique 4.

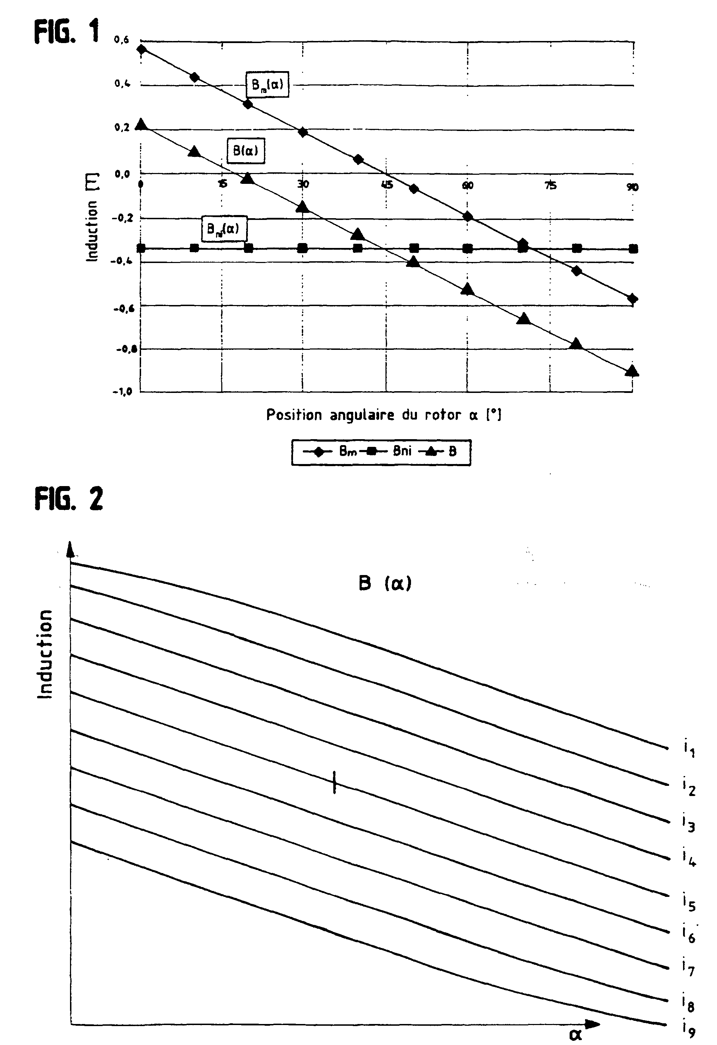

La figure 1 correspond à une représentation graphique de l'évolution, en ordonnée, des inductions B($\alpha$), Bm($\alpha$) et Bni($\alpha$) en fonction de la position angulaire $\alpha$ du rotor, reportée en abscisse, ceci dans le cadre de l'exemple d'actionneur représenté dans la figure 3. Dans ce cas particulier Bni($\alpha$) est une grandeur sensiblement indépendante de la position $\alpha$ dudit rotor de sorte qu'elle peut être assimilée à une constante.

En mesurant le courant dans ladite bobine 6 de la structure statorique 4, on peut en déduire l'induction Bni($\alpha$) due à ce courant, il suffit alors de la soustraire de l'induction totale B($\alpha$) mesurée au niveau de la sonde magnétosensible 8 pour obtenir la grandeur Bm($\alpha$).

La grandeur Bm($\alpha$) ainsi obtenue correspond à l'induction produite par l'aimant du rotor laquelle respecte une fonction connue par rapport à la position angulaire de ce dernier. Il est alors facile d'en déduire cette position.

Il convient d'observer que la saturation du circuit magnétique, apparaissant pour les valeurs de courant élevé, engendre une non linéarité sur la fonction B($\alpha$). Ceci conduit à une erreur de position pour les courants élevés dans la bobine. Toutefois, cette situation n'est pas gênante pour l'asservissement en position. En effet, lorsque l'écart entre la position que l'on cherche à transmettre à l'organe mobile de l'actionneur et la position réellement occupée est importante, le courant appelé par l'asservissement est important, tandis que, au contraire, il diminue lorsque cet organe mobile converge vers la position recherchée.

La figure 2 représente sous forme graphique, une certaine constance du principe appliqué au travers du procédé selon l'invention.

Ainsi, il est illustré, sur ce graphique, l'évolution de l'induction totale traversant la sonde magnétosensible, de l'actionneur représenté dans la figure 3, en fonction de la position $\alpha$ de l'organe mobile 2, ceci pour différentes valeurs de courant électrique dans la bobine.

La suite de la description se rapporte à des exemples de réalisation d'actionneurs électromagnétiques autorisant la mise en oeuvre du procédé selon l'invention.

Ainsi, la figure 3 illustre un actionneur électromagnétique polarisé 1 de type rotatif dont la structure statorique 4 est en forme de fer à cheval entouré par une bobine 6 et définissant deux branches 9, 10 dont les extrémités 11, 12 forment des pôles statoriques 13, 14. Ceux-ci délimitent un espace semi-cylindrique dans lequel prend position l'organe mobile 2 sous forme d'un rotor constitué par une pièce en fer doux cylindrique 16 comportant, en périphérie, un secteur aimanté radialement 17 d'épaisseur L dans la direction d'aimantation. Les pôles statoriques 13, 14 et la pièce en fer doux cylindrique 16, définissant le rotor, déterminent entre eux l'entrefer principal 3 de longueur radiale E.

Sur cette figure 3 il est encore illustré, au niveau de la structure statorique 4 l'entrefer secondaire 7 qui, comme visible dans les exemples de réalisations des figures 4 et 5 peut adopter différentes formes de réalisation. Dans cet entrefer secondaire 7 prend position l'élément magnétosensible 8 en particulier, une sonde de Hall ou une sonde magnétorésistive. Dans la mesure où un entrefer secondaire droit, donc constant et adapté à l'épaisseur de la sonde peut entraîner une baisse du couple due au courant de l'actionneur électromagnétique, ainsi que la création d'un couple de rappel magnétostatique en position centrale de l'organe mobile 2 lorsque la bobine 6 n'est pas alimentée, il y a lieu d'en limiter les effets.

Aussi, selon un mode de réalisation préférentiel, l'on vient réaliser un entrefer secondaire 7 dont la perméance est augmentée par un rétrécissement local de part et d'autre de l'élément magnétosensible 8.

L'induction totale dans la sonde est donnée par la relation mentionnée plus haut, à savoir :

$$B(\alpha) = Bm(\alpha) + Bni(\alpha)$$

où l'induction due à la position de l'organe mobile 2 respecte dans le cas d'un actionneur électromagnétique polarisé rotatif tel que représenté dans la figure 3, une relation du type :

$$Bm(\alpha) = \gamma.\alpha$$

$\gamma$ étant une constante qui dépend des grandeurs géométriques de l'actionneur et des propriétés physiques des matériaux utilisés. Elle peut être obtenue approximativement par une approche théorique ou de manière précise par une simple mesure.

La figure 6 illustre un autre exemple de réalisation d'un actionneur électromagnétique polarisé de type rotatif, de structure sensiblement identique à celle décrite ci-dessus et représentée dans la figure 3. L'organe mobile 2 est cependant défini, ici, par un secteur aimanté 19 en forme d'une tuile semi-cylindrique prévue apte à se déplacer dans l'entrefer principal 3, de forme semi-annulaire, délimité par deux parties ferromagnétiques 20, 21 de la structure statorique 4. L'entrefer secondaire 7 est défini au niveau de la partie ferromagnétique fixe 21 de forme cylindrique prenant position entre les pôles statoriques 13, 14 que définissent les extrémités 11, 12 des branches 9, 10 de l'autre partie ferromagnétique fixe de construction en forme de fer à cheval.

En particulier, cet entrefer secondaire 7 se situe, préférentiellement, dans le plan médian 22 passant entre lesdits pôles statoriques 13, 14 et s'étend, ainsi, selon un diamètre intérieur au secteur aimanté en forme de tuile 19. Au niveau de cet entrefer secondaire 7 prend position l'élément magnétosensible 8.

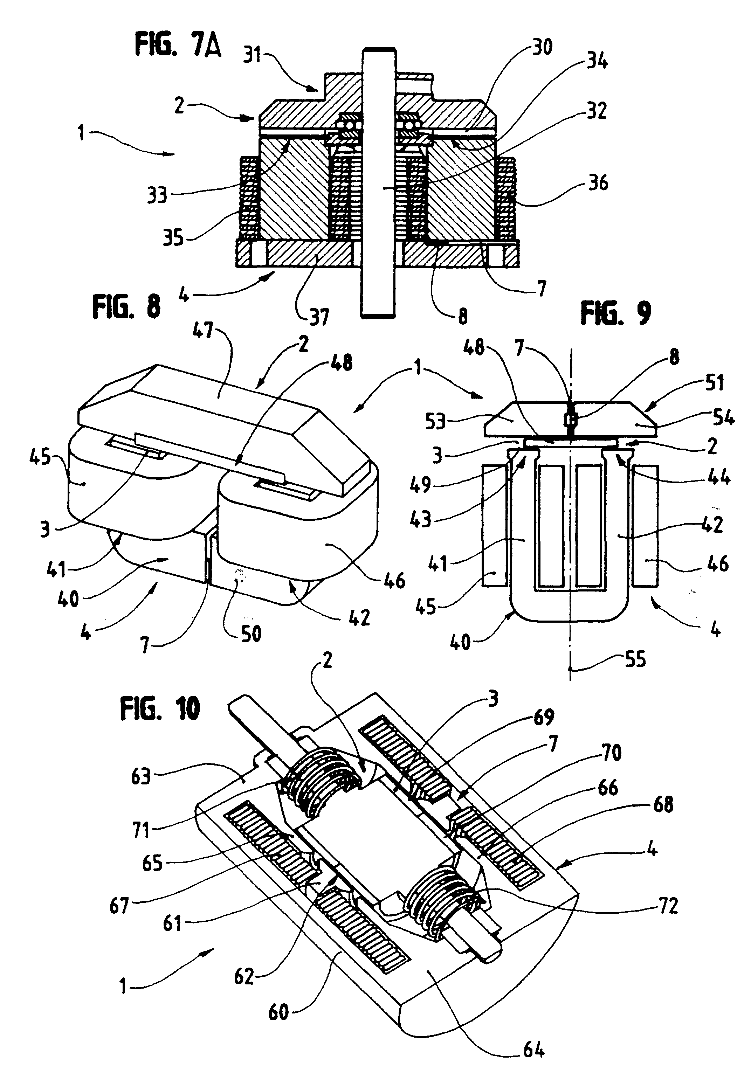

Les figures 7A et 7B illustrent un autre mode de réalisation d'un actionneur électromagnétique polarisé permettant la mise en oeuvre du procédé selon l'invention. Un tel actionneur, par ailleurs décrit dans le document EP-0 642 704, comporte un organe mobile 2 muni d'un aimant mince 30 en forme de disque aimanté dans le sens de l'épaisseur, présentant deux secteurs aimantés avec une polarité alternée, et collé sur un circuit rotorique 31 solidaire d'un axe d'accouplement 32 venant traverser la structure statorique 4. Celle-ci comporte deux paires de pôles 33,33',34,34' entourés chacun d'une bobine 35,35',36,36' délimitant un canal central pour le passage de l'axe d'accouplement 32. Ces parties polaires 33,33',34,34' s'étendent depuis une semelle 37 sachant qu'entre cette semelle 37 de la structure statorique 4, au pied de l'une au moins de ces parties polaires 33,33',34,34', peut être défini un entrefer secondaire 7 pour l'implantation de la sonde magnétosensible 8.

Une des caractéristiques importantes d'un actionneur électromagnétique polarisé rotatif est le couple que peut fournir cet actionneur. De manière générale, on cherchera à ce que ce couple soit le plus élevé possible pour une puissance électrique donnée appliquée aux bornes de l'actionneur et, pour certaines applications, à ce qu'il soit constant sur toute la course de l'organe mobile 2.

Or, le fait d'ajouter un entrefer secondaire de mesure 7 dans sa structure statorique 4 a pour effet de modifier le circuit magnétique et, ainsi, de perturber le couple fourni par l'actionneur en diminuant le couple utile, ceci par rapport au couple de détente ou couple de rappel magnétostatique en position centrale de l'organe mobile 2, auquel il a déjà été fait référence plus haut. De plus, comme cela a également été indiqué préalablement, un tel entrefer secondaire 7 pose le problème de la saturation du circuit magnétique 5 pour des valeurs de courant élevés.

Au travers de la construction d'un actionneur, tel que représenté dans les figures 7A et 7B, ne comportant un entrefer secondaire 7 ne s'étendant sous le pied que d'une seule partie polaire (ici référencée 34), l'on vient remédier aux problèmes précités. En particulier, le flux magnétique venant traverser, dans ces conditions, l'élément magnétosensible 8 reste proportionnel à la position de l'organe mobile 2 dans l'entrefer principal 3, de sorte qu'il peut en être déduit cette position de cet organe mobile 2 pour une alimentation en courant déterminée des bobines 35,35',36,36'. De plus, si, pour un actionneur du type correspondant à la figure 3 et n'ayant qu'un seul circuit magnétique formé par les deux pôles statoriques 13 et 14 et le rotor avec son secteur aimanté 17, la présence d'un entrefer secondaire 7 engendre une diminution sensible du couple utile qui peut être de l'ordre de 30% à 50% par rapport à un même actionneur sans entrefer secondaire, cette diminution dans le cas un actionneur tel que défini plus haut et visible figures 7A et 7B n'est que de l'ordre de 10% à 20%.

Par ailleurs, le couple dit de détente (ou de rappel magnétostatique) s'en trouve considérablement diminué. Ainsi, le rapport entre le couple utile et ce couple de détente s'est avéré bien plus élevé dans ce dernier mode de réalisation, correspondant à l'actionneur des figures 7A et 7B, en comparaison à une solution d'un actionneur tel que visible figure 3 et, ceci bien sûr , dans les mêmes conditions opératoires.

Il est illustré dans les figures 8, 9 et 10 des actionneurs électromagnétiques de type linéaire qui ont pour but de mettre en évidence la possibilité d'appliquer le procédé selon l'invention également à ce type d'actionneur.

En particulier, la figure 8 illustre un actionneur électromagnétique polarisé 1 comportant un organe mobile 2 et une structure statorique 4, celle-ci étant formée par une pièce en un matériau ferromagnétique 40 comportant deux branches 41, 42 dont les extrémités définissent des pôles statoriques 43, 44, ces branches 41, 42 étant entourées par des bobines électriques 45, 46.

L'organe mobile 2 est défini par une culasse 47 de forme trapézoïdale réalisée en un matériau ferromagnétique.

Cette culasse 47 comporte un secteur aimanté 48 définissant par rapport à la surface 49 des pôles statoriques 43, 44 un jeu fonctionnel déterminé.

Dans ce cas, un entrefer secondaire 7 peut être défini au niveau de la pièce ferromagnétique 40 de la structure statorique 4, préférentiellement à hauteur de la partie de liaison 50 reliant les branches 41, 42.

Le mode de réalisation présenté à la figure 9 correspond à un actionneur électromagnétique polarisé du type linéaire de structure similaire à celui illustré dans la figure 8, l'organe mobile 2 étant défini par le secteur aimanté 48 seul. Celui-ci est monté mobile à l'intérieur de l'entrefer principal 3 séparant deux parties ferromagnétiques fixes dont l'une correspond à la pièce ferromagnétique 40 de structure générale en « U », tandis que l'autre est définie par une culasse fixe 51 s'étendant au-dessus des surfaces 49 des pôles statoriques 43, 44 pour délimiter l'entrefer principal 3 dans lequel vient se déplacer ledit secteur aimanté 48. Ladite culasse fixe 51, en matériau ferromagnétique est ici subdivisée en deux parties 53, 54 selon un plan médian 55 passant entre lesdits pôles statiques 43, 44 de manière à définir un entrefer secondaire 7 recevant l'élément magnétosensible 8.

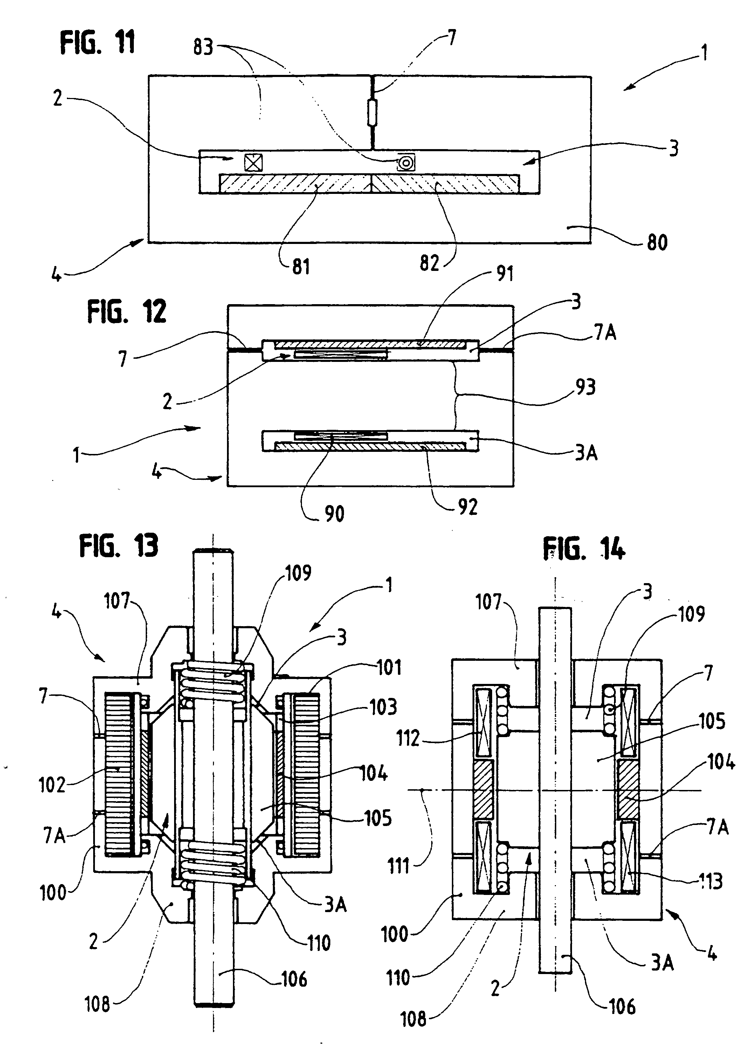

La figure 10 représente l'application du procédé selon l'invention à un actionneur électromagnétique polarisé linéaire de type cylindrique, tel que celui décrit dans le document FR-2.682.542. Cet actionneur comporte une enveloppe extérieure 60 de forme cylindrique correspondant à la structure statorique 4. Intérieurement, dans le plan médian transversal, cette enveloppe 60 comporte une partie annulaire 61 définissant un pôle statorique central 62. Par ailleurs, à ses extrémités elle est refermée par des flasques 63, 64 d'où s'étendent des pôles latéraux 65, 66 délimitant, par rapport à la paroi interne de l'enveloppe 60 un espace annulaire où prennent position des bobines électriques 67, 68.

Quant à l'organe mobile 2, il se présente sous forme d'une pièce cylindrique mobile axialement dans la structure statorique 4 et comportant en périphérie deux secteurs aimantés radialement 69, 70 venant se rejoindre sensiblement à hauteur du plan médian transversal de cet organe mobile 2, donc au droit du pôle statorique central 62. Entre les flasques 63, 64 et cet organe mobile 2 sont interposés des ressorts 71, 72.

Dans une telle conception, l'entrefer secondaire 7 a été défini avantageusement, entre la partie annulaire 61, correspondant au pôle statorique central 62, et ladite enveloppe extérieure 60, l'entrefer secondaire 7 recevant l'élément magnétosensible 8.

Aussi, au niveau de cet élément magnétosensible est mesurée une induction totale qui est une fonction connue, dépendante du courant électrique traversant les bobines 67, 68 et de la position de l'organe mobile 2.

Tel que déjà précisé plus haut, le procédé selon la présente invention concerne, également, des actionneurs à bobine mobile.

Ainsi, il a été représenté, dans la figure 11, un exemple de réalisation de ce type d'actionneur à bobine mobile. Il comporte une structure statorique 4 sous forme d'une pièce ferromagnétique 80 délimitant intérieurement, un entrefer principal 3. Celui-ci se présente sous forme d'une fente dans laquelle sont logés, côte à côte et de manière fixe, deux aimants permanents minces 81, 82 de polarité alternée, de manière apte à créer un champ magnétique au niveau de cet entrefer principal 3, accueillant, par ailleurs, une bobine 83 définissant l'organe mobile 2.

La structure statorique 4 comporte, là encore, au moins un entrefer secondaire de mesure 7 destiné à accueillir un élément magnétosensible 8.

A noter que, comme précédemment évoqué, un tel entrefer secondaire de mesure 7 peut emprunter différentes formes de réalisation et en particulier il peut être réalisé de manière à obtenir une perméance importante au travers de rétrécissements de part et d'autre de l'élément magnétosensible 8.

En fin de compte, en mesurant, à la fois, le courant circulant dans la bobine 83 et l'induction totale dans un tel entrefer secondaire de mesure 7, il est possible, là encore, d'en déduire la position de l'organe mobile 2 c'est à dire de ladite bobine 83.

On remarquera cependant, qu'à la différence d'un actionneur comportant, en tant qu'organe mobile, un aimant tel que décrit plus haut, dans le cas des actionneurs à bobine mobile, l'induction Ba créée par les aimants permanents 81, 82 dans un entrefer secondaire de mesure 7 est constante. A l'inverse, la bobine mobile crée, au niveau de cet entrefer secondaire 7, une induction qui est dépendante, à la fois, de la position de cette bobine 83 et de la valeur du courant qui la traverse. Par conséquent, cette induction engendrée par l'organe mobile 2 est, ici, du type $B_{ni}(x,i)$ ou x correspond à la position de la bobine 83 et i représente le courant traversant celle-ci.

Autrement dit, le signal transmis par l'élément magnétosensible 8 donne une image de l'induction totale $B(x,_{ni})$ le traversant, sachant que $B(x,_{ni}) = B_a + B_{ni}(x,_{ni})$.

Aussi, en venant soustraire à l'induction totale mesurée $B(x,_{ni})$, l'induction constante Ba résultant, dans cet entrefer secondaire de mesure 7, des aimants permanents 81, 82, on obtient la valeur de cette induction $B_{ni}(x,_{ni})$, ceci pour un courant i traversant la bobine 83, et il peut en être déduit la position de cette dernière dans l'entrefer principal 3, dans la mesure où cette induction $B_{ni}(x,_{ni})$ respecte une fonction connue de cette position.

Tel que cela ressort des explications qui précèdent, le principe mis en application pour de tels actionneurs à bobine mobile est tout à fait semblable à celui appliqué pour les actionneurs à aimant mobile.

Dans la figure 12 il est illustré le mode de réalisation d'un actionneur dont l'organe mobile 2 est, là encore, défini par une bobine 90. Toutefois, la structure statorique 4, sous forme d'une pièce ferromagnétique, définit, non pas un, mais deux entrefers principaux 3, 3A dans chacun desquels est logé un aimant permanent mince 91, 92, aimanté dans le sens de l'épaisseur. Ceci génère un champ magnétique appliqué à la bobine 90, en tant qu'organe mobile 2, s'étendant au travers de ces entrefers principaux 3, 3A en venant s'enrouler autour de la partie ferromagnétique 93 délimitée par ces derniers. Dans le cadre de ce mode de réalisation, il est défini, de préférence, au niveau de la structure statorique 4, deux entrefers secondaires de mesure 7, 7A, sachant qu'au niveau de l'un d'entre eux, au moins, est placé un élément magnétosensible 8.

Il convient de noter, à ce propos, que pour des questions de facilité d'interprétation des mesures, donc de simplification du traitement électronique de ces dernières, il peut être utile de placer dans chacun de ces entrefers secondaires 7, 7A un élément magnétosensible 8,8A.

Les figures 13 à 15 correspondent à des exemples d'actionneurs électromagnétiques polarisés bistables.

L'actionneur de la figure 13 comporte une structure statorique 4 définie par une enveloppe extérieure de forme cylindrique 100 qui présente, dans l'épaisseur de sa paroi, un espace annulaire 101 pour le logement d'une bobine électrique 102. Cette enveloppe 100 délimite, encore, un évidement cylindrique 103

chemisé au moyen d'un aimant annulaire mince 104 aimanté radialement. A l'intérieur de cet évidement cylindrique 103 est, montée mobile, une pièce ferromagnétique 105 solidaire d'un arbre de transmission 106 s'étendant au travers de flasques d'extrémité 107, 108 refermant de part et d'autre l'enveloppe 100. Entre ces flasques 107, 108 et ladite pièce ferromagnétique mobile 105 sont interposés des ressorts 109, 110.

Ainsi, selon le sens du courant traversant à la bobine 102, il en résulte un champ magnétique dans la pièce ferromagnétique mobile 105 venant se reboucler au niveau de la structure statorique fixe 4 au travers de l'un des entrefers principaux 3, 3A délimités par les flasques 107, 109 et les extrémités de ladite pièce ferromagnétique mobile 105.

La conception telle que représentée dans cette figure 13 prévoit, au niveau de la structure statorique fixe 4, au moins un, préférentiellement deux entrefers secondaires 7, 7A pour la réception d'un élément magnétosensible 8,8A, sachant qu'au moins un entrefer secondaire au niveau duquel l'on vient mesurer l'induction est suffisant pour la mise en oeuvre du procédé selon l'invention.

La figure 14 représente un mode de réalisation d'un actionneur dont l'organe mobile 2 est, là encore, défini par une pièce ferromagnétique et reprenant une conception sensiblement similaire à l'actionneur illustré dans la figure 13.

Toutefois, dans ce cas précis, l'enveloppe cylindrique 100 comporte, intérieurement et dans sa partie médiane l'aimant annulaire 104 aimanté radialement. Celui-ci est encadré, de part et d'autre, dans la direction axiale de l'actionneur 1, par une bobine électrique 112, 113. Finalement, l'on dispose, là encore, de deux entrefers principaux 3, 3A variables tandis qu'au niveau de la structure statorique fixe 4, à savoir l'enveloppe cylindrique 100 est prévu au moins un entrefer secondaire de mesure 7, préférentiellement deux 7, 7A, adoptant une disposition symétrique par rapport au plan médian transversal 111 de l'actionneur 1.

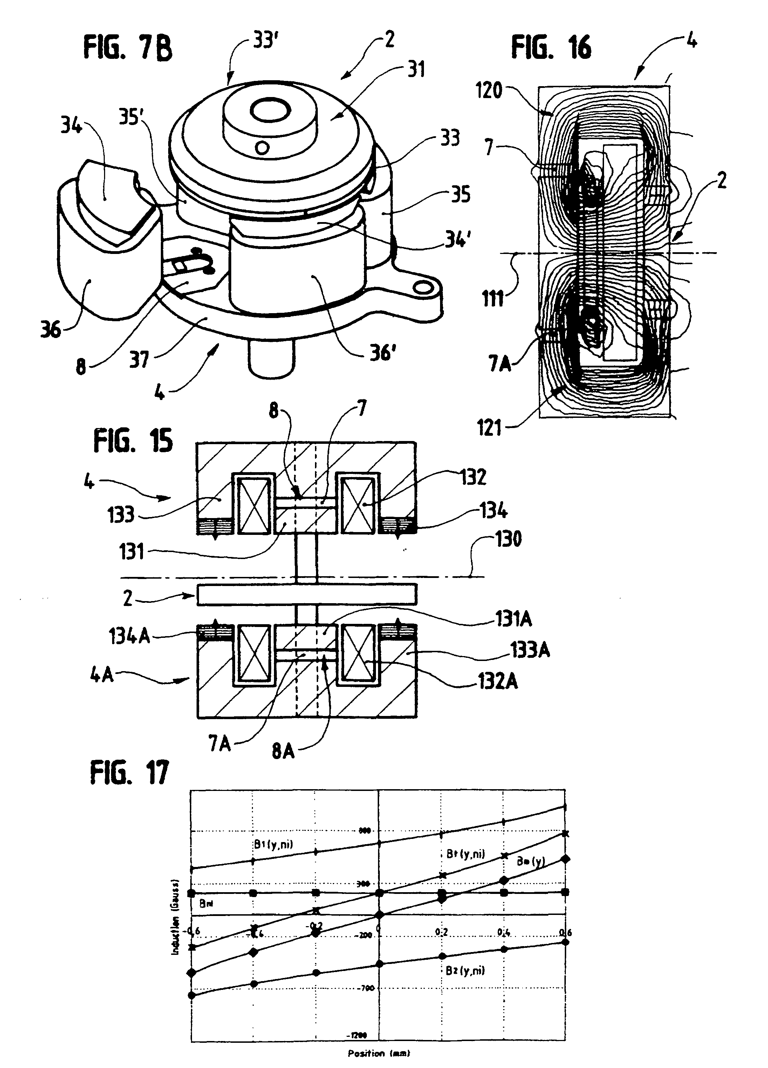

La figure 16 représente de manière schématisée le flux du à l'aimant 104 dans la structure statorique 4 et dans l'organe mobile 2, ceci en l'absence de courant dans la ou les bobines électriques 102 ; 112,113 et avec cet organe mobile en position centrale par rapport aux entrefers principaux 3,3A. Ainsi, l'on constate qu'en raison de la construction symétrique de l'actionneur par rapport à son plan médian transversal 111, ce flux est parfaitement divisé de part et d'autre de ce dernier. En conséquence, l'introduction d'un entrefer secondaire 7 dans la partie statorique d'un des deux demi circuits 120,121 délimités par ledit plan de symétrie 111 doit être, préférentiellement, compensée par l'introduction d'un entrefer secondaire symétrique 7A de manière à ne pas perturber l'allure symétrique de la loi des forces de cet actionneur.

Par ailleurs, la circulation de ce flux étant partagée entre les deux demi-circuits magnétiques 120 et 121, il est avantageux de les additionner pour avoir une information globale. Aussi selon l'invention, pour de tels actionneurs symétriques bistables polarisés, la structure statorique 4 comporte préférentiellement deux entrefers secondaires 7,7A qui, comme indiqué plus haut, empruntent une disposition symétrique par rapport au plan de symétrie 111 de cet actionneur. En outre, au niveau de chacun de ces entrefer secondaire 7,7A prend position un élément magnétosensible 8,8A, tel qu'une sonde à effet Hall, apte à délivrer un signal électrique représentatif de l'induction magnétique le traversant, sachant que l'on vient additionner ces signaux afin de définir le flux total dans le circuit magnétique de ce type d'actionneur. Dans la mesure où l'on connaît, par ailleurs, le flux du au courant traversant la bobine 102 ou les bobines 112,113, il est aisé d'en déduire le flux correspondant à l'aimant et, de là, la position de l'organe mobile 2

Ceci a été visualisé figure 17 correspondant à une représentation graphique de l'induction, en ordonnées, en fonction de la position de l'organe mobile 2, dans le cas d'un actionneur selon le mode réalisation de la figure 13. En particulier, ont été tracées les évolutions de l'induction $B_1(y,ni)$ traversant l'entrefer secondaire 7 et de l'induction $B_2(y,ni)$ mesurée au travers l'élément magnétosensible 8A dans l'autre entrefer secondaire 7A disposé symétriquement. Quant au tracé $B_t(y,ni)$, il correspond à la somme de $B_1(y,ni)$ et de $B_2(y,ni)$ d' où l'on déduit l'induction $B_m(y)$ due à l'aimant et dépendant exclusivement de la position de l'organe mobile 2, connaissant, par ailleurs, celle Bni due au courant et qui est définie comme le produit d'une fonction f(y) de la position de cet organe mobile par le nombre d'ampères-tours, soit $B_{ni}=f(y) .ni$.

Bien entendu, ce principe est également applicable au cas d'un actionneur tel que visible dans la figure 14, comportant, non pas une, mais deux bobines 112 et 113.

Quant à la figure 15, elles concerne un actionneur polarisé à palette mobile avec aimants, ici au stator. Plus précisément, cet actionneur comporte, dans ce cas, deux structures statoriques 4,4A identique disposées symétriquement de part et d'autre d'un plan transversal 130. Chacune de ces structures statoriques 4,4A comporte au moins un pôle statorique central 131,131A autour duquel se trouve la bobine électrique 132,132A. Extérieurement à ladite bobine 132,132A, ces structures statoriques 4,4A viennent encore s'étendre pour définir un ou des pôles statoriques latéraux 133,133A recevant un aimant 134, aimanté en direction dudit plan médian 130.

Par ailleurs, l'organe mobile 2, sous forme d'une palette en un matériau ferromagnétique disposée parallèlement par rapport au plan 130, vient se déplacer entre ces deux structures statoriques 4 ,4A suivant une direction perpendiculaire à ce plan 130. Il est visible dans cette figure 15, un arbre de transmission 134 assurant le maintien et la transmission du mouvement de cette palette.

Ainsi, en fonction du sens du courant traversant les bobines électrique 132,132A, cette palette constituant l'organe mobile 2 vient se déplacer en direction des pôles statoriques 131,133 de l'une 4 des structures statoriques ou vers les pôles 131A,133A de l'autre 4A, ceci sous l'influence du flux magnétique résultant de ces dernières et venant se refermer au niveau de ladite palette au travers de l'un des entrefers principaux 3,3A.

A ce propos, il convient d'observer que ces flux magnétiques dans ces structures statoriques 4,4A ont pour conséquence, en fonction de ce sens du courant traversant leur bobine 132,132A respective, selon le cas d'attirer ou de repousser ladite palette. Aussi, selon l'invention, un entrefer secondaire 7,7A est réalisé au niveau de chacune des structures statoriques 4,4A, d'une part de manière à conserver la construction symétrique de l'actionneur et, d'autre part, pour placer dans chacun de ces entrefer secondaires 7,7A un élément magnétosensible 8,8A et permettre, ainsi, de mesurer l'induction magnétique totale traversant chacune desdites structures 4,4A. Là encore, l'on vient, ensuite, faire la somme des mesures relevées par ces éléments magnétosensibles 8,8A, pour en déduire l'induction due à la position de l'organe mobile 2, connaissant l'induction résultant du courant traversant les bobines 132,132A. Dans le mode de réalisation correspondant à la figure 15, les entrefers secondaires 7,7A sont définis au niveau du pôle statorique central 131,131A de ces structures statoriques 4,4A. Toutefois, ces entrefers secondaires 7, 7A pourraient encore se trouver au niveau du ou des pôles statoriques latéraux 133,133A.

De même, l'on observera que les aimants 134,134A peuvent être associés, indifféremment, aux pôles latéraux 133,133A, aux pôles centraux 131,131A, voire à l'organe mobile 2.

Tel que cela ressort de la description qui précède, la présente invention concerne, de manière non limitative, tout type d'actionneur électromagnétique polarisé dont le déplacement d'un organe mobile dans un circuit magnétique induit une variation de flux dans ce dernier.

## Revendications

1. Procédé pour la détermination de la position d'un organe mobile (2) dans au moins un entrefer principal (3, 3A) d'un actionneur électromagnétique polarisé (1) comportant une structure statorique (4) sous forme d'un circuit magnétique (5) réalisé en un matériau à haute perméabilité magnétique et comprenant au moins une bobine électrique (6 ; 35, 36 ; 45, 46 ; 67, 68 ; 83 ; 90 ; 102 ; 112, 113), l'entrefer principal (3, 3A) étant soumis à un champ magnétique résultant d'au moins un aimant (17 ; 19 ; 30 ; 48 ; 69, 70 ; 81, 82 ; 91, 92 ; 104 ; 134, 134A), selon le cas, fixe ou associé audit organe mobile (2), **caractérisé en ce que** :

- on définit au niveau du circuit magnétique (5) de la structure statorique (4) au moins un entrefer secondaire de mesure (7, 7A) ;

- on dispose dans au moins un entrefer secondaire (7, 7A) au moins un élément magnétosensible (8), tel qu'une sonde à effet Hall, une sonde magnétorésistive ou analogue, prévu apte à délivrer un signal électrique représentatif de l'induction magnétique totale le traversant, respectant une fonction connue dépendant :

  . du courant dans la ou les bobines électriques (6 ; 35, 36 ; 45, 46; 67, 68 ; 83 ; 90 ; 102 ; 112, 113) ;

  . et de la position de l'organe mobile (2) dans l'entrefer principal (3, 3A) ;

- on mesure le courant traversant la ou les bobines électriques (6 ; 35, 36 ; 45, 46 ; 67, 68 ; 83 ; 90 ; 102 ; 112, 113) pour déduire, à partir de la fonction connue et de l'induction magnétique totale dans l'entrefer secondaire (7, 7A) mesurée au travers du signal délivré par l'élément magnétosensible (8), ladite position de l'organe mobile (2) dans l'entrefer principal (3, 3A).

2. Actionneur électromagnétique polarisé pour la mise en oeuvre du procédé selon la revendication 1, comportant, d'une part, un organe mobile (2) dans au moins un entrefer principal (3, 3A) lequel est soumis à un champ magnétique résultant d'au moins un aimant 17 ; 19 ; 30 ; 48 ; 69, 70 ; 81, 82 ; 91, 92 ; 104 ; 134, 134A), selon le cas, fixe ou associé audit organe mobile (2) et une structure statorique (4) sous forme d'un circuit magnétique (5) réalisé en un matériau à haute perméabilité magnétique et comprenant au moins une bobine électrique (6 ; 35, 36 ; 45, 46 ; 67, 68 ; 83 ; 90 ; 102 ; 112 , 113), **caractérisé par le fait qu'**il comporte au moins un élément magnétosensible (8), tel qu'une sonde à effet Hall, prévu apte à délivrer un signal électrique représentatif de l'induction magnétique totale le traversant, disposé dans un entrefer secondaire de mesure (7, 7A) défini au niveau du circuit magnétique (5) de la structure statorique (4).

3. Actionneur électromagnétique polarisé selon la revendication 2, **caractérisé par le fait qu'**un entrefer secondaire (7, 7A) est défini de manière à optimiser sa perméance, en réalisant, de préférence, un rétrécissement local de part et d'autre de la sonde magnétosensible.

**4.** Actionneur électromagnétique polarisé selon l'une des revendications 2 ou 3 comportant une structure statorique (4) en forme de fer à cheval de manière à définir deux branches (9, 10) dont les extrémités (11, 12) forment des pôles statoriques (13, 14) délimitant un espace semi-cylindrique dans lequel prend position un organe mobile (2) sous forme d'un rotor constitué par une pièce en fer doux cylindrique (16) comportant, en périphérie, un secteur aimanté radialement (17), **caractérisé par le fait qu'**au moins un entrefer secondaire (7) est défini au niveau de la structure statorique (4) en forme de fer à cheval.

**5.** Actionneur électromagnétique polarisé selon l'une des revendications 2 ou 3 comportant une première partie ferromagnétique (20) de construction en forme de fer à cheval comportant deux branches (9, 10) dont les extrémités (11, 12) forment des pôles statoriques (13, 14) et délimitent un espace semi-cylindrique dans lequel prend position une autre partie ferromagnétique fixe (21) de forme cylindrique délimitant, par rapport à ladite première ferromagnétique (20), un entrefer principal (3) de forme semi-annulaire à l'intérieur duquel vient se déplacer un organe mobile (2) défini par un secteur aimanté (19) en forme d'une tuile semi-cylindrique, **caractérisé par le fait qu'**au moins un entrefer secondaire de mesure (7) pour la réception d'un élément magnétosensible (8) est défini au niveau de la partie ferromagnétique fixe (21) de forme cylindrique prenant position entre les pôles statoriques (13, 14) de l'autre partie ferromagnétique fixe (20) de construction en forme de fer à cheval, cet entrefer secondaire de mesure (7) se situant dans le plan médian (22) passant entre lesdits pôles statoriques (13, 14) de manière à s'étendre selon un diamètre intérieur au secteur aimanté en forme de tuile (19).

**6.** Actionneur électromagnétique polarisé selon l'une des revendications 2 ou 3, comportant un organe mobile (2) muni d'un aimant mince (30) en forme de disque aimanté dans le sens de l'épaisseur, présentant deux secteurs aimantés avec une polarité alternée et collée sur un circuit rotorique (31) solidaire d'un axe d'accouplement (32) venant traverser une structure statorique (4) comportant une paire de pôles (33, 33', 34, 34') entourés chacun d'une bobine (35, 35', 36, 36') délimitant un canal central pour le passage de l'axe d'accouplement (32), ces parties polaires (33, 33', 34, 34') s'étendant depuis une semelle (37), **caractérisé par le fait qu'**entre cette semelle (37) de la structure statorique (4) au pied de l'une au moins de ces parties polaires (33, 33', 34, 34') est défini un entrefer secondaire de mesure (7) pour l'implantation d'un élément magnétosensible (8).

**7.** Actionneur selon la revendication 6, **caractérisé en ce que** l'entrefer secondaire (7) est défini au pied d'un seul des pôles statoriques (34).

**8.** Actionneur électromagnétique polarisé selon l'une des revendications 2 ou 3, comportant, d'une part, une structure statorique (4) formée par une pièce en un matériau ferromagnétique (40) comportant deux branches (41, 42) entourées par des bobines (45, 46) et dont les extrémités définissent des pôles statoriques (43, 44), et, d'autre part, un organe mobile (2) défini par une culasse (47) en un matériau ferromagnétique comportant un secteur aimanté (48) respectant, par rapport à la surface (49) des pôles statoriques (43, 44) un jeu fonctionnel déterminé, **caractérisé par le fait qu'**au moins un entrefer secondaire (7) est défini au niveau de la pièce ferromagnétique (40) de la structure statorique (4), plus particulièrement à hauteur de la partie de liaison (50) reliant les branches (41, 42).

**9.** Actionneur électromagnétique polarisé selon l'une quelconque des revendications 2 ou 3, comportant un organe mobile (2) et une structure statorique (4), celle-ci étant formée, d'une part, par une pièce en un matériau ferromagnétique (40) comportant deux branches (41, 42) entourées par des bobines électriques (45, 46) et définissant des pôles statoriques (43, 44) et, d'autre part, par une culasse fixe (51) s'étendant au-dessus des surfaces (49) des pôles statoriques (43, 44) pour délimiter un entrefer principal (3) dans lequel vient se déplacer un secteur aimanté (48) définissant l'organe mobile (2), **caractérisé par le fait que** ladite culasse fixe (51) en matériau ferromagnétique, est subdivisée en deux parties (53, 54) selon un plan médian (55) passant entre lesdits pôles statoriques (44, 45) de manière à définir un entrefer secondaire de mesure (7) apte à recevoir un élément magnétosensible (8).

**10.** Actionneur électromagnétique polarisé selon une des revendications 2 ou 3 comportant une structure statorique (4) définie par une enveloppe extérieure (60), de forme cylindrique, comportant, intérieurement, une partie annulaire (61) définissant un pôle statorique central (62) et refermée, à ses extrémités, par des flasques (63, 64) d'où s'étendent des pôles latéraux (65, 66), définissant, par rapport à la paroi interne de l'enveloppe (60) un espace annulaire où prennent position des bobines électriques (67, 68), dans cette structure statorique (4) étant monté, axialement, un organe mobile (2) comportant, en périphérie, deux secteurs aimantés radialement (69, 70), entre les flasques (63, 64) et cet organe mobile (2) étant interposés des ressorts (71, 72), **caractérisé par le fait qu'**il comporte au moins un entrefer secondaire de mesure (7) défini entre la partie annulaire (61), correspondant au pôle statorique central (62), et ladite enveloppe extérieure (60) de la structure statorique (4), dans cet entrefer secondaire de mesure (7) étant disposé un élément magnétosensible (8).

11. Actionneur électromagnétique polarisé selon l'une des revendications 2 ou 3, comportant une structure statorique (4) sous forme d'une pièce ferromagnétique (80) délimitant, intérieurement, au moins un entrefer principal (3, 3A) recevant, de manière fixe, au moins un aimant permanent mince (81, 82 ; 91, 92), apte à créer un champ magnétique au niveau de cet entrefer principal (3, 3A) accueillant, par ailleurs, une bobine (83 ; 90) définissant l'organe mobile (2), **caractérisé par le fait que** la structure statorique (4) comporte au moins un entrefer secondaire de mesure (7, 7A) destiné à accueillir un élément magnétosensible (8).

12. Actionneur électromagnétique polarisé selon l'une des revendications 2 ou 3, comportant une structure statorique (4) définie par une enveloppe extérieure de forme cylindrique (100) présentant, dans l'épaisseur de sa paroi, un espace annulaire (101) pour le logement d'une bobine électrique (102), cette enveloppe (100) délimitant, encore, un évidement cylindrique (103) chemisé au moyen d'un aimant annulaire mince (104) aimanté radialement, dans cet évidement cylindrique (103) étant disposé un organe mobile (2) sous forme d'une pièce ferromagnétique (105) solidaire d'un arbre de transmission (106) s'étendant au travers de flasques d'extrémité (107, 108) refermant, de part et d'autre, l'enveloppe (100), entre ces flasques (107, 108) et ladite pièce ferromagnétique mobile (105) étant définis des entrefers principaux (3, 3A), **caractérisé par le fait qu'**il est prévu au niveau de la structure statorique fixe (4) au moins un, préférentiellement deux, entrefers secondaires (7, 7A) pour la réception d'un élément magnétosensible (8).

13. Actionneur électromagnétique polarisé selon l'une des revendications 2 ou 3, comportant une structure statorique (4) sous forme d'une enveloppe extérieure cylindrique (100) comportant, intérieurement et dans sa partie médiane, un aimant annulaire (104) aimanté radialement, celui-ci étant encadré, de part et d'autre dans la direction axiale de l'actionneur (1), par une bobine électrique (112, 113), cette enveloppe cylindrique extérieure (100) étant refermée, à ses extrémités, par des flasques (107, 108) délimitant, par rapport aux extrémités d'un organe mobile (2) défini par une pièce ferromagnétique (105) montée mobile axialement dans ladite structure statorique (4), des entrefers principaux (3, 3A), **caractérisé par le fait qu'**au niveau de l'enveloppe cylindrique (100), correspondant à la structure statorique (4), est prévu au moins un entrefer secondaire de mesure (7), préférentiellement deux (7, 7A), adoptant une position symétrique par rapport au plan médian transversal (111) de l'actionneur (1), au niveau de l'un au moins de ses entrefers secondaires de mesure (7) étant disposé un élément magnétosensible (8).

14. Actionneur selon l'une des revendications 12 ou 13, présentant une construction symétrique par rapport à un plan médian transversal (111), **caractérisé en ce qu'**il comporte au niveau de sa structure statorique (4) deux entrefers secondaires de mesure (7,7A), disposés symétriquement par rapport audit plan de symétrie transversal (111) et dans chacun desquels est placé un élément magnétosensible (8,8A) prévu apte à délivrer un signal électrique représentatif de l'induction le traversant, la somme de ces inductions mesurés respectant une fonction connue dépendant du courant dans la ou les bobines (102 ; 112,113) et de la position de l'organe mobile (2) dans les entrefers principaux (3,3A).

15. Actionneur électromagnétique polarisé selon l'une des revendications 2 ou 3, comportant, d'une part, deux structures statoriques (4,4A) identiques disposées symétriquement de part et d'autre d'un plan transversal (130) et présentant au moins un pôle statorique central (131,131A) autour duquel se trouve une bobine électrique (132,132A) et, d'autre part, un organe mobile (2), sous forme d'une palette en un matériau ferromagnétique, venant se déplacer entre ces deux structures statoriques (4,4A) par rapport auxquels il délimite des entrefers principaux (3,3A), ceci suivant une direction perpendiculaire au plan (130) et fonction du sens du courant traversant lesdites bobines électriques (132,132A), **caractérisé en ce qu'**un entrefer secondaire de mesure (7,7A), recevant un élément magnétosensible (8,8A), est réalisé au niveau de chacune des structures statoriques (4,4A), pour mesurer l'induction magnétique totale traversant chacune desdites structures (4,4A) et déduire, de la somme de ces inductions mesurées, l'induction due à la position de l'organe mobile (2) et, donc, la position de ce dernier, connaissant l'induction résultant du courant traversant les bobines (132,132A).

16. Actionneur selon la revendication 15, **caractérisé en ce que** extérieurement à ladite bobine (132,132A), les structures statoriques (4,4A) viennent s'étendre pour définir un ou des pôles statoriques latéraux (133,133A).

**Patentansprüche**

1. Verfahren zur Positionsbestimmung eines beweglichen Elements (2) in mindestens einem Hauptluftspalt (3, 3A) eines polarisierten elektromagnetischen Aktuators (1), umfassend eine statorische Struktur (4) in Form von einem Magnetkreis (5), hergestellt aus einem Material mit hoher magnetischen Durchlässigkeit und umfassend mindestens eine elektrische Spule (6 ; 35, 36 ; 45, 46 ; 67, 68 ; 83 ; 90 ; 102; 112, 113), wobei der Hauptluftspalt (3, 3A) einem Magnetfeld unterworfen sei, das sich von mindestens einem Magneten (17 ; 19 ; 30 ; 48 ; 69, 70 ; 81, 82 ; 91, 92 ; 104 ; 134, 134A) ergibt, der, je nach dem Fall, fest oder dem besagten beweglichen Element (2) zugeordnet ist, **dadurch gekennzeichnet, daß**

- im Bereich des Magnetkreises (5) der statorischen Struktur (4) mindestens ein sekundärer Meßluftspalt (7, 7A) definiert wird;
- in mindestens einem sekundären Luftspalt (7, 7A) mindestens ein magnetisch empfindliches Element (8) wie eine Sonde mit Halleffekt, eine magnetowiderstandssonde oder dergleichen angebracht wird, geeignet vorgesehen, um ein für die gesamte es durchfließende magnetische Induktion repräsentatives elektrisches Signal zu senden, berücksichtigend eine bekannte Funktion abhängig
- von dem Strom in der oder in den elektrischen Spulen (6 ; 35, 36 ; 45, 46 ; 67, 68 ; 83 ; 90 ; 102; 112, 113);
- und von der Position des beweglichen Elements (2) im Hauptluftspalt (3, 3A) ;
- der die elektrische Spule oder Spulen (6 ; 35, 36 ; 45, 46 ; 67, 68 ; 83 ; 90 ; 102 ; 112, 113) durchfließende Strom gemessen wird, um, ausgehend von der bekannten Funktion und von der gesamten magnetischen Induktion im sekundären Luftspalt (7, 7A), die mit Hilfe des durch das magnetisch empfindliche Element (8) gesendete Signals gemessen wurde, die besagte Position des beweglichen Elements (2) im Hauptluftspalt (3, 3A) zu erschließen.

2. Polarisierter elektromagnetischer Aktuator für die Anwendung des Verfahrens nach Anspruch 1, umfassend, einerseits, ein bewegliches Element (2) in mindestens einem Hauptluftspalt (3, 3A), welcher einem Magnetfeld unterworfen ist, das sich von mindestens einem Magneten 17 ; 19 ; 30 ; 48 ; 69, 70 ; 81, 82 ; 91, 92 ; 104 ; 134, 134A) ergibt, der, je nach dem Fall, fest oder dem besagten beweglichen Element (2) zugeordnet ist, und eine statorische Struktur (4) in Form von einem Magnetkreis (5), hergestellt aus einem Material mit hoher magnetischen Durchlässigkeit und umfassend mindestens eine elektrische Spule (6 ; 35, 36 ; 45, 46 ; 67, 68 ; 83 ; 90 ; 102 ; 112, 113), **dadurch gekennzeichnet, daß** er mindestens ein magnetisch empfindliches Element (8) wie eine Sonde mit Halleffekt umfaßt, geeignet vorgesehen, um ein für die gesamte es durchfließende magnetische Induktion repräsentatives elektrisches Signal zu senden, das sich in einem sekundären Meßluftspalt (7, 7A) befindet, der im Bereich des Magnetkreises (5) der statorischen Struktur (4) gebildet ist.

3. Polarisierter elektromagnetischer Aktuator nach Anspruch 2, **dadurch gekennzeichnet, daß** ein sekundärer Luftspalt (7, 7A) definiert ist, derart, um seine Durchlässigkeit zu optimieren, indem vorzugsweise eine lokale Verengung beiderseits der magnetisch empfindlichen Sonde verwirklicht wird.

4. Polarisierter elektromagnetischer Aktuator nach einem der Ansprüche 2 oder 3, umfassend eine hufeisenförmige statorische Struktur (4), derart, um zwei Schenkel (9, 10) zu bilden, deren Enden (11, 12) die statorischen Pole (13, 14) bilden, abgrenzend einen halbzylindrischen Raum, in dem sich ein bewegliches Element (2) in Form von einem Rotor befindet, der durch ein zylindrisches Stück aus weichem Eisen (16) gebildet ist, umfassend auf dem Umkreis einen radial magnetisierten Abschnitt (17), **dadurch gekennzeichnet, daß** mindestens ein sekundärer Luftspalt (7) im Bereich der hufeisenförmigen statorischen Struktur (4) gebildet ist.

5. Polarisierter elektromagnetischer Aktuator nach einem der Ansprüche 2 oder 3, umfassend einen ersten ferromagnetischen Teil (20) mit einer hufeisenförmigen Konstruktion, umfassend zwei Schenkel (9, 10), deren Enden (11, 12) die statorischen Pole (13, 14) bilden und einen halbzylindrischen Raum abgrenzen, in dem sich ein weiterer fester, zylinderförmiger ferromagnetischer Teil (21) befindet, abgrenzend hinsichtlich des besagten ersten ferromagnetischen Teiles (20) einen halbringförmigen Hauptluftspalt (3), im dessen Inneren sich ein bewegliches Element (2) bewegt, das durch einen magnetisierten Abschnitt (19) mit der Gestalt von einer halbzylindrischen Ziegel gebildet ist, **dadurch gekennzeichnet, daß** mindestens ein sekundärer Meßluftspalt (7) für die Aufnahme eines magnetisch empfindlichen Elements (8) im Bereich des festen, zylinderförmigen ferromagnetischen Teiles (21) gebildet ist, der sich zwischen den statorischen Polen (13, 14) des anderen festen ferromagnetischen Teils (20) mit hufeisenförmiger Konstruktion befindet, wobei dieser sekundäre Meßluftspalt (7) in der Mittelebene (22) liegt, die zwischen den besagten statorischen Polen (13, 14) übergeht, derart, um sich nach einem inneren Durchmesser am magnetisierten Abschnitt in der Gestalt von einer Ziegel (19) zu erstrecken.

6. Polarisierter elektromagnetischer Aktuator nach einem der Ansprüche 2 oder 3, umfassend ein bewegliches Element (2), das mit einem dünnen Magneten (30) in Form von einer Scheibe versehen ist, die nach der Richtung der Dicke magnetisiert ist, aufweisend zwei Sektoren, die mit einer Polarität magnetisiert sind, die abwechselnd und an einem rotorischen Kreis (31) gebunden ist, der fest mit einer Kupplungsachse (32) verbunden ist, die eine statorische Struktur (4) durchquert, umfassend ein Paar von Polen (33, 33', 34, 34'), jeweils umgeben von einer Spule (35, 35', 36, 36'), abgrenzend einen zentralen Kanal für den Durchgang der Kupplungsachse (32), wobei diese polaren Teile (33, 33', 34, 34') sich ab einer Sohle (37) erstrecken, **dadurch gekennzeichnet, daß** zwischen dieser Sohle (37) der statorischen Struktur (4) am Fuß von mindestens einem dieser polaren Teile (33, 33', 34, 34') ein sekundärer Meßluftspalt (7) für das Einsetzen eines magnetisch empfindlichen Elements (8) definiert ist.

7. Aktuator nach Anspruch 6, **dadurch gekennzeichnet, daß** der sekundäre Luftspalt (7) am Fuß eines einzigen der statorischen Pole (34) definiert ist.

8. Polarisierter elektromagnetischer Aktuator nach einem der Ansprüche 2 oder 3, umfassend, einerseits, eine statorische Struktur (4), die durch ein Stück aus ferromagnetischem Material (40) gebildet ist, umfassend zwei Schenkel (41, 42), die von den Spulen (45, 46) umgeben sind und deren Enden die statorischen Pole (43, 44) bilden, und, andererseits, ein bewegliches Element (2), das durch einen Zylinderkopf (47) aus einem ferromagnetischen Material gebildet ist, umfassend einen magnetisierten Sektor (48), berücksichtigend hinsichtlich der Oberfläche (49) der statorischen Pole (43, 44) ein bestimmtes funktionelles Spiel, **dadurch gekennzeichnet, daß** mindestens ein sekundärer Luftspalt (7) im Bereich des ferromagnetischen Stückes (40) der statorischen Struktur (4), insbesondere im Bereich des Verbindungsstückes (50), welches die Schenkel (41, 42) verbindet, definiert ist.

9. Polarisierter elektromagnetischer Aktuator nach irgendeinem der Ansprüche 2 oder 3, umfassend ein bewegliches Element (2) und eine statorische Struktur (4), wobei diese gebildet sei, einerseits, durch ein Stück aus ferromagnetischem Material (40), umfassend zwei Schenkel (41, 42), die von den elektrischen Spulen (45, 46) umgeben sind, und bildend die statorischen Pole (43, 44), und, andererseits, durch einen festen Zylinderkopf (51), der sich über den Oberflächen (49) der statorischen Pole (43, 44) erstreckt, um einen Hauptluftspalt (3) abzugrenzen, in welchem sich ein magnetisierter Sektor (48) bewegt, der das bewegliche Element (2) bildet, **dadurch gekennzeichnet, daß** der besagte feste Zylinderkopf (51) aus ferromagnetischem Material in zwei Teilen (53, 54) nach einer Mittelebene (55) unterteilt ist, die zwischen den besagten statorischen Polen (44, 45) übergeht, derart, um einen sekundären Meßluftspalt (7) zu bilden, der geeignet ist, ein magnetisch empfindliches Element (8) aufzunehmen.

10. Polarisierter elektromagnetischer Aktuator nach einem der Ansprüche 2 oder 3, umfassend eine statorische Struktur (4), die durch ein zylinderförmiges Außengehäuse (60) gebildet ist, umfassend innerlich einen ringförmigen Teil (61), der einen zentralen statorischen Pol (62) bildet, und an seinen Enden durch Seitenbacken (63, 64) wieder verschlossen ist, von wo aus sich die Seitenpole (65, 66) erstrecken, bildend hinsichtlich der inneren Wand des Gehäuses (60) einen ringförmigen Raum, wo sich die elektrischen Spulen (67, 68) befinden, wobei in dieser statorischen Struktur (4) axial ein bewegliches Element (2) montiert sei, umfassend auf dem Umkreis zwei radial magnetisierte Sektoren (69, 70), wobei zwischen den Seitenbacken (63, 64) und diesem beweglichen Element (2) Federn (71, 72) angeordnet sind, **dadurch gekennzeichnet, daß** er mindestens einen sekundären Meßluftspalt (7) umfaßt, der zwischen dem ringförmigen Teil (61), der dem zentralen statorischen Pol (62) entspricht, und dem besagten Außengehäuse (60) der statorischen Struktur (4) definiert ist, wobei in diesem sekundären Meßluftspalt (7) ein magnetisch empfindliches Element (8) befindlich sei.

11. Polarisierter elektromagnetischer Aktuator nach einem der Ansprüche 2 oder 3, umfassend eine statorische Struktur (4) in Form von einem ferromagnetischen Stück (80), abgrenzend innerlich mindestens einen Hauptluftspalt (3, 3A), aufnehmend nach unbeweglicher Art und Weise mindestens einen dünnen Dauermagneten (81, 82 ; 91, 92), geeignet, um im Bereich dieses Hauptluftspaltes (3, 3A) ein Magnetfeld zu erzeugen, aufnehmend außerdem eine Spule (83 ; 90), definierend das bewegliche Element (2), **dadurch gekennzeichnet, daß** die statorische Struktur (4) mindestens einen sekundären Meßluftspalt (7, 7A) umfaßt, vorgesehen, um ein magnetisch empfindliches Element (8) aufzunehmen.

12. Polarisierter elektromagnetischer Aktuator nach einem der Ansprüche 2 oder 3, umfassend eine statorische Struktur (4), die durch ein zylinderförmiges Außengehäuse (100) definiert ist, aufweisend in der Dicke seiner Wand einen ringförmigen Raum (101) zum Aufnehmen einer elektrischen Spule (102), wobei dieses Gehäuse (100) noch eine zylindrische Aushöhlung (103) abgrenzt, die mit einem ringförmigen, dünnen, radial magnetisierten Magneten (104) verkleidet ist, wobei in dieser zylindrischen Aushöhlung (103) ein bewegliches Element (2) in Form von einem ferromagnetischen Stück (105) untergebracht sei, das mit einer Übertragungswelle (106) verbundenen ist, die sich durch die seitlichen Endbacken (107, 108) erstreckt, das Gehäuse (100) beiderseits wieder verschließend, wobei zwischen diesen Seitenbacken (107, 108) und dem besagten beweglichen ferromagnetischen Stück (105) die Hauptluftspalte (3, 3A) gebildet seien, **dadurch gekennzeichnet, daß** im Bereich der festen statorischen Struktur (4) mindestens einer, vorzugsweise zwei sekundäre Luftspalte (7, 7A), für die Aufnahme eines magnetisch empfindlichen Elements (8) vorgesehen ist.

13. Polarisierter elektromagnetischer Aktuator nach einem der Ansprüche 2 oder 3, umfassend eine statorische Struktur (4) in Form von einem zylindrischen Außengehäuse (100), umfassend innerlich und in seinem Mittelteil einen ringförmigen, radial magnetisierten Magneten (104), wobei dieser beiderseits nach der axialen Richtung des Aktuators (1) von einer elektrischen Spule (112, 113) eingerahmt ist, wobei dieses zylindrische Außengehäuse (100) an seinen Enden durch die Seitenbacken (107, 108) wieder verschlossen sei, die hinsichtlich der Enden eines beweglichen Elements (2), das durch ein ferromagnetisches Stück (105) gebildet ist, welches axial beweglich an der besagten statorischen Struktur (4) montiert ist, die Hauptluftspalte (3, 3A) abgrenzen, **dadurch gekennzeichnet, daß** im Bereich des zylindrischen Gehäuses (100), das der statorischen Struktur (4) entspricht, mindestens ein sekundärer Meßluftspalt (7), vorzugsweise zwei (7, 7A), vorgesehen ist, annehmend eine symmetrische Position hinsichtlich der schrägen Mittelebene (111) des Aktuators (1), wobei im Bereich von mindestens einem seiner sekundären Meßluftspalte (7) ein magnetisch empfindliches Element (8) angebracht sei.

14. Aktuator nach einem der Ansprüche 12 oder 13, aufweisend eine hinsichtlich einer schrägen Mittelebene (111) symmetrische Konstruktion, **dadurch gekennzeichnet, daß** er im Bereich seiner statorischen Struktur (4) zwei sekundäre Meßluftspalte (7, 7A) umfaßt, die hinsichtlich der besagten schrägen Symmetrieebene (111) symmetrisch angeordnet sind und in jedem von denen ein magnetisch empfindliches Element (8, 8A) gesetzt ist, geeignet vorgesehen, um ein für die es durchfließende Induktion repräsentatives elektrisches Signal zu senden, wobei die Summe dieser gemessenen Induktionen eine bekannte Funktion berücksichtigt, abhängig von dem Strom in der Spule oder Spulen (102 ; 112, 113) und von der Position des beweglichen Elements (2) in den Hauptluftspalten (3,3A).

15. Polarisierter elektromagnetischer Aktuator nach einem der Ansprüche 2 oder 3, umfassend, einerseits, zwei identische statorische Strukturen (4, 4A), angeordnet symmetrisch beiderseits einer schrägen Ebene (130) und aufweisend mindestens einen zentralen statorischen Pol (131, 131A), um welchen sich eine elektrische Spule (132, 132A) befindet, und, andererseits, ein bewegliches Element (2) in Form einer Palette aus ferromagnetischem Material, die sich zwischen diesen beiden statorischen Strukturen (4, 4A) bewegt, hinsichtlich welcher sie die Hauptluftspalte (3,3A) abgrenzt, und zwar folgend einer Richtung, die senkrecht zu der Ebene (130) und Funktion der Richtung des Stromes ist, der die besagten elektrischen Spulen (132, 132A) durchfließt, **dadurch gekennzeichnet, daß** ein sekundärer Meßluftspalt (7, 7A), der ein magnetisch empfindliches Element (8, 8A) aufnimmt, im Bereich jeder der statorischen Strukturen (4, 4A) verwirklicht ist, um die magnetische Gesamtinduktion, die jede der besagten Strukturen (4, 4A) durchfließt, zu messen und von der Summe dieser gemessenen Induktionen die Induktion, die auf die Position des beweglichen Elements (2) zurückzuführen ist, und also die Position dieses Letzteren, zu erschließen, kennend die Induktion, die sich aus dem Strom ergibt, der die Spulen (132, 132A) durchfließt.

16. Aktuator nach Anspruch 15, **dadurch gekennzeichnet, daß** äußerlich an der besagten Spule (132, 132A) sich die statorischen Strukturen (4, 4A) erstrecken, um einen oder mehrere statorische Seitenpole (133, 133A) zu bilden.

**Claims**

1. Method for determining the position of a movable element (2) in at least one main air gap (3, 3A) of a polarised electromagnetic actuator (1) including a stator structure (4) in the form of a magnetic circuit (5) made out of a material with high magnetic permeability and comprising at least one electric coil (6 ; 35, 36 ; 45, 46 ; 67, 68 ; 83 ; 90 ; 102 ; 112, 113), the main air gap (3, 3A) being subjected to a magnetic field resulting from at least one magnet (17 ; 19 ; 30 ; 48 ; 69, 70 ; 81, 82 ; 91, 92 ; 104; 134, 134A), which is, as the case may be, fixed or associated with said movable element (2), **characterised in that** :

   - at least one measuring secondary air gap (7, 7A) is defined at the level of the magnetic circuit (5) of the stator structure (4) ;
   - in at least one secondary air gap (7, 7A) is arranged at least one magnet-sensitive element (8), such as a Hall effect probe, a magnetoresistive probe or the like, designed capable of supplying an electrical signal representative of the total magnetic induction passing through it, in conformity with a known function depending on:

- the current in the electric coil or coils (6 ; 35, 36 ; 45, 46 ; 67, 68 ; 83 ; 90 ; 102; 112, 113) ;
- and the position of the movable element (2) in the main air gap (3, 3A) ;

- the current flowing through the electric coil or coils (6 ; 35, 36 ; 45, 46 ; 67, 68 ; 83 ; 90 ; 102 ; 112, 113) is measured in order to deduce from the known function and the total magnetic induction in the secondary air gap (7, 7A) measured through the signal supplied by the magnet-sensitive element (8) said position of the movable element (2) in the main air gap (3, 3A).

2. Polarised electromagnetic actuator for implementing the method according to claim 1, including, on the one hand, a movable element (2) in at least one main air gap (3, 3A) which is subjected to a magnetic field resulting from at least one magnet 17 ; 19; 30 ; 48 ; 69, 70 ; 81, 82 ; 91, 92 ; 104 ; 134, 134A) which is, as the case may be, fixed or associated with said movable element (2) and a stator structure (4) in the form of a magnetic circuit (5) made out of a material with high magnetic permeability and comprising at least one electric coil (6 ; 35, 36 ; 45, 46 ; 67, 68 ; 83 ; 90; 102 ; 112, 113), **characterised in that** it includes at least one magnet-sensitive element (8), such as a Hall effect probe, designed capable of supplying an electrical signal representative of the total magnetic induction passing through it, arranged in a measuring secondary air gap (7, 7A) defined at the level of the magnetic circuit (5) of the stator structure (4).

3. Polarised electromagnetic actuator according to claim 2, **characterised in that** a secondary air gap (7, 7A) is so defined as to optimise its permeability by creating, preferably, a local narrowing on both sides of the magnet-sensitive probe.

4. Polarised electromagnetic actuator according to one of claims 2 or 3, including a horseshoe-like stator structure (4) so as to define two legs (9, 10) the ends (11, 12) of which form stator poles (13, 14) delimiting a semi-cylindrical space in which is positioned a movable element (2) in the form of a rotor formed of a cylindrical soft-iron part (16) including, on the periphery, a radially magnetised sector (17), **characterised in that** at least one secondary air gap (7) is defined at the level of the horseshoe-like stator structure (4).

5. Polarised electromagnetic actuator according to one of claims 2 or 3, including a first ferromagnetic portion (20) with a horseshoe-like construction including two legs (9, 10) the ends (11, 12) of which form stator poles (13, 14) and delimiting a semi-cylindrical space in which is positioned another cylindrical fixed ferromagnetic portion (21) delimiting, with respect to said first ferromagnetic portion (20), a semi-annular main air gap (3) inside which moves a movable element (2) defined by a semi-cylindrical tile-like magnetised sector (19), **characterised in that** at least one measuring secondary air gap (7) for receiving a magnet-sensitive element (8) is defined at the level of the cylindrical fixed ferromagnetic portion (21) positioned between the stator poles (13, 14) of the other fixed ferromagnetic portion (20) with a horseshoe-like construction, this measuring secondary air gap (7) being located in the median plane (22) passing between said stator poles (13, 14) so as to extend according to an inner diameter to the magnetised tile-like sector (19).

6. Polarised electromagnetic actuator according to one of claims 2 or 3, including a movable element (2) provided with a thin disk-like magnet (30) magnetised thicknesswise, having two magnetised sectors with alternate polarity and stuck on a rotor circuit (31) integral with a coupling axis (32) passing through a stator structure (4) including a pair of poles (33, 33', 34, 34') each surrounded by a coil (35, 35', 36, 36') delimiting a central channel for the passage of the coupling axis (32), these polar portions (33, 33', 34, 34') extending from a bottom plate (37), **characterised in that** between this bottom plate (37) of the stator structure (4) at the foot of at least one of these polar portions (33, 33', 34, 34') is defined a measuring secondary air gap (7) for the implantation of a magnet-sensitive element (8).

7. Actuator according to claim 6, **characterised in that** the secondary air gap (7) is defined at the foot of a single one of the stator poles (34).

8. Polarised electromagnetic actuator according to one of claims 2 or 3, including, on the one hand, a stator structure (4) formed of a part made out of a ferromagnetic material (40) including two legs (41, 42) surrounded by coils (45, 46) and the ends of which define stator poles (43, 44), and, on the other hand, a movable element (2) defined by a yoke (47) made out of a ferromagnetic material including a magnetised sector (48) maintaining, with respect to the surface (49) of the stator poles (43, 44), a certain functional backlash, **characterised in that** at least one secondary air gap (7) is defined at the level of the ferromagnetic part (49) of the stator structure (4), more specifically at the level of the linking portion (50) connecting the legs (41, 42).

9. Polarised electromagnetic actuator according to any of claims 2 or 3, including a movable element (2) and a stator structure (4), the latter being comprised, on the one hand, of a part made out of a ferromagnetic material (40) including two legs (41, 42) surrounded by electric coils (45, 46) and defining stator poles (43, 44) and, on the other hand, a fixed yoke (51) extending above the surfaces (49) of the stator poles (43, 44) to delimit a main air gap (3) in which moves a magnetised sector (48) defining the movable element (2), **characterised in that** said fixed yoke (51) made out of a ferromagnetic material is subdivided into two portions (53, 54) according to a median plane (55) passing between said stator poles (44, 45) so as to define a measuring secondary air gap (7) designed capable of receiving a magnet-sensitive element (8).

10. Polarised electromagnetic actuator according to one of claims 2 or 3, including a stator structure (4) defined by a cylindrical outer enclosure (60), including, internally, an annular portion (61) defining a central pole stator (62) and confined, at its ends, by flanges (63, 64) from where side poles (65, 66) extend, defining, with respect to the inner wall of the enclosure (60), an annular space in which electric coils (67, 68) are positioned, in this stator structure (4) being mounted, axially, a movable element (2) including, on the periphery, two radially magnetised sectors (69, 70), between the flanges (63, 64) and this movable element (2) being interposed springs (71, 72), **characterised in that** it includes at least one measuring secondary air gap (7) defined between the annular portion (61), corresponding to the central pole stator (62), and said outer enclosure (60) of the stator structure (4), in this measuring secondary air gap (7) being arranged a magnet-sensitive element (8).

11. Polarised electromagnetic actuator according to one of claims 2 or 3, including a stator structure (4) in the form of a ferromagnetic part (80) delimiting, internally, at least one main air gap (3, 3A) receiving, in a fixed manner, at least one thin permanent magnet (81, 82; 91, 92), designed capable of creating a magnetic field at the level of this main air gap (3, 3A) accommodating, in addition, a coil (83; 90) defining the movable element (2), **characterised in that** the stator structure (4) includes at least one measuring secondary air gap (7, 7A) designed for receiving a magnet-sensitive element (8).

12. Polarised electromagnetic actuator according to one of claims 2 or 3, including a stator structure (4) defined by a cylindrical outer enclosure (100) having, in the thickness of its wall, an annular space (101) for accommodating an electric coil (102), this enclosure (100) also delimiting a cylindrical recess (103) jacketed by means of a thin annular magnet (104) radially magnetised, in this cylindrical recess (103) being arranged a movable element (2) in the form of a ferromagnetic part (105) integral with a transmission shaft (106) extending through end flanges (107, 108) confining, on both sides, the enclosure (100), between these flanges (107, 108) and said movable ferromagnetic piece (105) being defined main air gaps (3, 3A), **characterised in that** at the level of the fixed stator structure (4) at least one, preferably two, secondary air gaps (7, 7A) have been provided for receiving a magnet-sensitive element (8).

13. Polarised electromagnetic actuator according to one of claims 2 or 3, including a stator structure (4) in the form of a cylindrical outer enclosure (100) including, internally and in its median part, a radially magnetised annular magnet (104), the latter being surrounded, on both sides in the axial direction of the actuator (1), by an electric coil (112, 113), this outer cylindrical enclosure (100) being confined, at its ends, by flanges (107, 108) delimiting, with respect to the ends of a movable element (2) defined by a ferromagnetic part (105) mounted axially movable in said stator structure (4), main air gaps (3, 3A), **characterised in that** at the level of the cylindrical enclosure (100), corresponding to the stator structure (4), is provided at least one measuring secondary air gap (7), preferably two (7, 7A), adopting a symmetrical position with respect to the transversal median plane (111) of the actuator (1), at the level of at least one of its measuring secondary air gaps (7) being arranged a magnet-sensitive element (8).

14. Actuator according to one of claims 12 or 13, having a symmetrical construction with respect to a transversal median plane (111), **characterised in that** it includes at the level of its stator structure (4) two measuring secondary air gaps (7, 7A), arranged symmetrically with respect to said transversal symmetry plane (111), in each one of which is placed a magnet-sensitive element (8, 8A) designed capable of supplying an electrical signal representative of the induction passing through it, the sum of these inductions measured complying with a known function depending on the current in the coil or coils (102; 112, 113) and on the position of the movable element (2) in the main air gaps (3, 3A).

15. Polarised electromagnetic actuator according to one of claims 2 or 3, including, on the one hand, two identical stator structures (4, 4A) arranged symmetrically on both sides of a transversal plane (130) and having at least one central stator pole (131, 131A) around which there is an electric coil (132, 132A) and, on the other hand, a movable element (2), in the form of a pallet made out of a ferromagnetic material, moving between these two stator structures (4, 4A) with respect to which it delimits main air gaps (3, 3A), according to a direction perpendicular to the plane (130) and depending on the direction of the current flowing through said electric coils (132, 132A), **characterised in that** a measuring secondary air gap (7, 7A), receiving a magnet-sensitive element (8, 8A), is arranged at the level of each stator structure (4, 4A), in order to measure the total magnetic induction passing through each of said structures (4, 4A) and to deduce from the sum of these measured inductions the induction due to the position of the movable element (2) and, hence, the position of the latter, knowing the induction resulting from the current flowing through the coils (132, 132A).

16. Actuator according to claim 15, **characterised in that** externally with respect to said coil (132, 132A), the stator structures (4, 4A) extend so as to define a side stator pole or poles (133, 133A).

**FIG. 1**

Position angulaire du rotor α [°]

**FIG. 2**

B (α)

FIG. 3

FIG. 4

FIG. 5

FIG. 6

FIG. 7A

FIG. 8

FIG. 9

FIG. 10

FIG. 11

FIG. 12

FIG. 13

FIG. 14

FIG. 7B

FIG. 16

FIG. 15

FIG. 17